# EUROPEAN PATENT SPECIFICATION

(11) **EP 3 303 119 B1**
(45) Date of publication and mention of the grant of the patent: **24.02.2021**
(21) Application number: 16795926.1
(22) Date of filing: 20.05.2016
(51) Int. Cl.: B63G 8/00, F16L 11/133, B63C 11/52, E21B 41/04, F16L 1/24, B63G 8/14, E21B 17/01

(54) **AN UNDERWATER BUOY INSTALLATION SYSTEM AND KIT, A METHOD FOR ASSEMBLING IT, USE THEREOF, AND A METHOD FOR INSTALLING A BUOY**
UNTERWASSERBOJENINSTALLATIONSSYSTEM UND -KIT, VERFAHREN ZUR MONTAGE DAVON, VERWENDUNG DAVON UND VERFAHREN ZUM INSTALLIEREN EINER BOJE
SYSTÈME ET KIT D'INSTALLATION D'UNE BOUÉE SOUS-MARINE, SON PROCÉDÉ D'ASSEMBLAGE, SON UTILISATION, ET PROCÉDÉ D'INSTALLATION D'UNE BOUÉE

(30) Priority: 21.05.2015 DK 201570301
(43) Date of publication of application: 11.04.2018
(73) Proprietor: SubC Partner A/S, 6700 Esbjerg (DK)
(72) Inventor: WIGANT, Lars, 6852 Billum (DK)
(74) Representative: Nielsen, Leif
(86) International application number: PCT/DK2016/050136
(87) International publication number: WO 2016/184474

(56) References cited:
- EP-A2- 2 149 723
- WO-A1-2013/144601
- WO-A2-89/07071
- WO-A2-2008/100943
- GB-A- 2 171 143
- GB-A- 2 258 030
- GB-A- 2 448 213
- NO-B1- 334 758
- US-A- 3 381 485
- US-A- 3 621 911
- US-A- 4 484 838
- US-A- 4 620 819
- US-A- 4 721 055
- US-A- 5 039 254
- US-A1- 2012 275 864
- US-A1- 2014 147 217
- US-A1- 2014 270 967
- US-B1- 6 971 934

## Description

### FIELD OF THE INVENTION

The present invention relates to an underwater buoy installation system.

### BACKGROUND OF THE INVENTION

Offshore flexible riser systems with flow lines are used routinely for transferring fluids between a well on the sea bed and a vessel floating on the surface of the sea. Along the flow line, typically, a plurality of buoys are attached, giving the flow line a flow profile in which the lowest part of the flow line extends relatively steeply upwards from the anchoring point at the sea bed and wherein the upper part of the flow line extends at a more flat angle towards the vessel, such that it allows a relatively large degree of lateral movement of the vessel relatively to the anchoring point at the bottom.

In order to minimize influence on the routine working conditions, the buoys are designed for long term stability and tightness. However, occasionally, the buoys have to be exchanged. This can be a difficult operation under sea level, especially, if the buoys are located in an area underneath the vessel where they are inaccessible by crane-based exchange equipment carried by another vessel. Rough sea conditions may additionally complicate the operation of exchange of buoys. Disconnection of the flow line from the vessel is a possibility, which, however, is a complicated and expensive solution.

For this reason, it would be desirable to provide a system for exchange of buoys that does not disturb the general operation of the flow line.

Buoys for the above described systems, generally have static buoyancy. However, prior art discloses also systems with variable buoyancy, for example as disclosed in US3436776, US4860487, US7311469. A flexible underwater buoyancy system for an underwater ROV (remotely operated vehicle) is disclosed in US2007/186837 and GB 2258030A. GB 2258030A discloses an ROV with a clamp and a method to lift a pipeline from the floor of a body of water. The clamp is supported by a buoy with adjustable buoyancy.

US2014/270967A1 discloses a system and a method for protecting a subsea pipeline by using lifting buoyancy modules to act on the pipeline. The inflatable lifting system may be installed on and removed from the pipeline with a clamp for attaching to a pipeline having an inflatable lifting buoyancy. The clamp does not have an buoyancy adjustment system.

Prior art also discloses adjustable buoyancy packs located directly on a clamp for attaching a member disposed in a subsea environment, for example disclosed in GB 2171143A. GB 2171143A discloses a remotely operable clamp for attachment to a member in a subsea environment and utilizable with cathodic protection anodes or anodes pair to be attached to a subsea portion of a metal structure. The ROV has conventional buoyancy packs to provide a selected neutral buoyancy. The buoyancy packs are located on the clamp housing.

Norwegian patent document NO334758 discloses a remotely controlled underwater vehicle with gripper system for installing sleeves on underwater pipes. The vehicle is limited to pipes that are in horizontal orientation on the seabed, why this system is not suitable for riser lines.

US 6971934B1 discloses a buoy system that rise to a sea surface without the use of an ROV and descend therefrom upon command. Without an ROV it is difficult to attach buoys in a precise position on an underwater construction.

### DESCRIPTION / SUMMARY OF THE INVENTION

It is an objective of the invention to provide a general improvement in the art. Especially, it is an objective to provide an improved method and system for removal and attachment of buoys on an underwater construction, for example flexible underwater line, especially riser line. Particularly, the exchange of buoys shall not disturb the operation of the subsea riser line. This objective is achieved with an underwater buoy installation and de-installation system and method as claimed and as described in the following.

The system comprises an underwater vehicle configured for underwater operation and transport of buoys under sea level. The vehicle is equipped with a controlled propulsion and manoeuvring system, for example including water jet thrusters. The vehicle also has a gripper system for gripping buoys for the transport and installation as well as de-installation.

For example, the vehicle comprises a frame to which the gripper system is mounted via an orientation adjustment mechanism that is used for adjusting the gripper orientation and position in a controlled way relatively to the vehicle frame when installing a buoy onto a flexible underwater line or for de-installing the buoy therefrom. In comparison to the aforementioned Norwegian patent NO334758, the orientation of the gripper is adjustable relatively to the frame, and the gripper can be brought into the optimal orientation for operation on a riser.

Advantageously, in order to control the gripper system, the vehicle comprises an illumination system and a camera system that illuminates and records the gripper and the area around the gripper.

The vehicle comprises a controller system for the manoeuvring and operation of the various operative elements, including the gripper system and the propulsion and steering system. The term controller system, is not limited to a single unit but also includes a plurality of controller units, typically interoperating controller units.

For example, the underwater manoeuvring and operation is controlled by a computer and a controller system in cooperation, the controller system receiving command data from the computer. The term computer is not limited to a single unit but also includes a plurality of computer units, typically interoperating computer units.

In some embodiments, the vehicle is configured for autonomous operation. In this embodiment, the computer is programmed for performing a sequence of operations, including manoeuvring the vehicle toward a location where buoys have to be installed or deinstalled and for performing the installation or de-installation itself. The computer receives data from various monitors, including but not limited to the camera system, sonar system, depth meters, orientation data and operational data from the propulsion system. The computer evaluates these received data according to the programming for, upon evaluation, give corresponding commands to the propulsion and steering system and the gripper system to execute the necessary process automatically and autonomously.

In other embodiments, the vehicle is a remotely operated vehicle, ROV. In this case, the vehicle is connected to a surface control vessel via a connection line, typically called umbilical. A control centre is provided on the control vessel for remotely controlling manoeuvring and operation of the vehicle. The manoeuvring and operation of the vehicle is potentially done manually by a control person in the control centre on the control vessel. The person receives information from various monitoring units on the vehicle, including the camera system, and is accordingly steering the vehicle to the correct location and is also performing the gripping and releasing of buoys. Commands for propulsion and steering and further operation of the vehicle, including the gripper system, are transmitted from the control centre to the vehicle through a signal transmission line in the umbilical.

In some embodiments, the manoeuvring and operation is assisted by a computer either as part of the control centre on the control vessel or on the vehicle. For example, a person on the control vessel is instructing the computer to transmit the corresponding steering and/or operational commands in digital form to the controller on the vehicle. The use of a computer as an additional control mechanism is providing assistance to the person and reduces the risk for accidents when a person gives commands for the manoeuvring and operation.

For example, the computer is located in the control centre on the control vessel, and the controller is located on the vehicle, and exchange of data between the computer and the controller is done via a digital data transmission line in the umbilical extending from the computer to the controller. Manoeuvre and operation of the vehicle is controlled by a person with assistance from the computer in the control centre on the control vessel.

In order to control and facilitate manoeuvring of the vehicle under water, the vehicle comprises a buoyancy adjustment system for continuously adjusting the buoyancy of the vehicle during underwater operation. This is important not only when manoeuvring the vehicle toward the buoys but also, once a buoy is gripped or released, adding or reducing substantial buoyancy to the vehicle, for example the equivalent buoyancy of 1000 litre. Typically, before releasing of the buoy from the gripper, the buoyance of the gripper is increased by the buoyancy adjustment system to a level corresponding to the buoyancy of the buoy. Once the buoyancy is adjusted, the buoy can be released without affecting the proper floating of the vehicle.

For example, the buoyancy adjustment system comprises a plurality of water tanks, wherein each water tank is divided into a first compartment for water and a second compartment for gas, the two compartments being mutually separated by a flexible membrane, such that filling of pressurised gas into the second compartment exerts pressure on the membrane and thereby presses water out of the first compartment. This way, buoyancy of the vehicle is increased. Oppositely, release of gas from the tank allows more water to flow into the tank, which reduces buoyancy of the tank. In a practical embodiment, the flexible membrane is an inflatable bladder inside the tank.

A tank or, rather, a plurality of tanks, is attached to a buoy gripper remotely from the frame. The latter allows specific buoyancy adjustment of the gripper in dependence on whether a buoy is gripped by the gripper or not. Also, the buoyancy can be adjusted to the specific buoyancy of the buoy in the gripper. Optionally, tanks for adjusting the buoyancy of the frame of the vehicle are also attached to the frame.

Typically, the underwater vehicle with the gripper is provided as a customization of a multi-purpose standard gripper-free underwater vehicle, for example an ROV. Such multi-purpose standard gripper-free underwater vehicle comprises a buoyancy system to provide a largely floating vehicle. The term "largely floating" is used here with the meaning of the weight or buoyancy being less than 10%, for example less than 5%, of the total above-water weight of the vehicle in question. This implies a slight deviation from neutral buoyancy. For example, an ROV with a weight of more than 1000 kg, for example 3000-4000 kg, would typically have a buoyancy or weight in water of less than 50 kg, for example as low as only 20kg or lower, due to an integrated static buoyancy system. Such static buoyancy system is typically provided by integrated light-weight foam-filled tanks in the gripper-free vehicle. As the gripper system is being attached to the gripper-free underwater vehicle, for example by a special latch system, and the gripper system is used for gripping buoys that have a large and variable buoyancy, the specialised gripper system itself is advantageously provided with an adjustable buoyancy adjustment system in order to adjust the buoyancy of the gripper system in the case of holding a buoy in the gripper or when no buoy is in the gripper. Also, it should be recalled that such buoys can have various buoyancy, especially if the skin of the buoy is punctured, and the buoy is partially filled with water.

For example, such customization implies an assembly kit of a gripper and a gripper-free underwater vehicle. The assembly can be done on board of a ship. Alternatively, the assembly is advantageously done under water in order to reduce the necessary capacity of a crane ship that is lifting the components into the water. In this case, the gripper-free underwater vehicle with propulsion and steering system is submerged under sea level for the assembly with the gripper system, which is also submerged in the water separately from the vehicle. The buoyancy of the gripper system is adjusted to largely neutral buoyancy of the gripper system before it is mounted onto the gripper-free vehicle while submerged in water. The result is an underwater vehicle with a gripper system having a buoyancy adjustment system.

A gas system delivers pressurised gas to the tanks on the gripper. For monitoring the pressure in the gas system, a pressure meter is provided, feeding data for the pressure to the control vessel. An example of a robust and simple structure is found by a pressure metre in functional connection with a pressure display that is displaying the actual gas pressure in the gas system. The camera system is used to image the pressure display and transmitting the corresponding digital image data via the umbilical to the control vessel for display thereof.

For gripping and releasing buoys, the gripper system with a gripper extends from the vehicle frame via an orientation adjustment mechanism, for example a turn and tilt mechanism, that is used for adjusting the gripper orientation and position in a controlled way when installing a buoy onto a flexible underwater line or for de-installing the buoy therefrom. The orientation adjustment mechanism is functionally connected to the controller, which is electronically connected to the control vessel from which it receives control commands, including commands for adjusting the orientation of the gripper and for gripping and releasing a buoy.

Advantageously, the gripper comprises two hinged jaws for gripping a buoy. Optionally, each jaw has a holding mechanism for engaging with one half of a buoy. By opening the jaws, the two halves of the buoy are pulled apart. This is used for releasing the buoy from the underwater construction, for example flexible underwater line, or for attaching the buoy thereto. An example of a holding mechanism involves a movable pin that is movable towards and away from the buoy when the buoy is abutting the jaws. The pin engages with a cooperating receiver element in the buoy for fastening one half of the buoy to one jaw and the other half to the other jaw. In case that the buoy is not provided with a cooperating receiver, the pin may be used to destructively penetrate the buoy during de-installation.

For example, during installation of a buoy, the holding mechanism is activated to engage each one of the two jaws with one of the two halves of the buoy, after which the two halves of the buoy are pulled apart by opening the jaws. While the two halves are pulled apart, the vehicle is navigated to the specific necessary installation position of the buoy and the two jaws closed in order to bring the two halves of the buoy together around a part of the construction for thereby fixing the buoy to that part of the construction. After fixation, the holding mechanism is disengaged from the buoy and the gripper is opened without pulling the two halves of the buoy apart, and the buoy is thereby released from the gripper.

In some embodiments, the orientation adjustment mechanism is implemented as part of a coupling between the frame and the gripper. For example, the coupling comprising a tilt hinge and a tilt actuator for tilting the gripper relatively to the frame about the tilt hinge. In normal orientation of the vehicle, the tilt mechanism can be arranged for lifting and lowering the gripper. A further hinged mechanism can optionally be included for moving the gripper from side to side. Typically, in addition, a rotational axle is provided, for example normal to a rotational direction of the tilt hinge, for rotation of the gripper relatively to the frame. With such orientation adjustment mechanism, the buoy can be precisely oriented for controlled attachment and detachments

The system as explained is, especially, useful for installation and/or de-installation of buoys that are located underneath a ship or platform at sea level, as the vehicle can be manoeuvred to the buoys underneath the ship. For example, the buoys are located on a flexible underwater line, such as a riser.

For example, in order for a buoy installation, the vehicle would be navigated with the buoy to the underwater construction and stop there in close proximity to the construction. The specific location for installation of the buoy on the underwater construction would be located, and the specific necessary orientation and position of the buoy for installing would be determined. Typically, this is done by using the camera system, although also sonar systems can be used alternatively or in addition. Correspondingly, the gripper would then be adjusted in order for the actual orientation of the buoy in the gripper to match the specific necessary orientation of the buoy. The vehicle would be navigated the last distance with the buoy in the gripper to match the specific necessary final position of the buoy, and the buoy would be installed at the construction in the specific necessary orientation and position. During the navigation the last distance just prior to installation, it may be necessary to fine-adjust the buoy orientation, especially, if the vehicle orientation under water changes during the final navigation. Similarly, a de-installation process comprises the manoeuvring of the vehicle to the construction, adjustment of the gripper to match the orientation of the buoy and then gripping around the buoy for finalising the de-installation process.

### SHORT DESCRIPTION OF THE DRAWINGS

The invention will be explained in more detail with reference to the drawing, where
- FIG. 1: shows a ship connected by a riser line to a subsea station;
- FIG. 2: illustrates operation of a ROV underneath the ship;
- FIG. 3: illustrates an underwater vehicle in a) side view, b) end view, c) top view, and d) perspective view;
- FIG. 4: is a drawing of a buoyancy tank when a) increasingly inflated and b) deflated
- FIG. 5: is a schematic drawing of the tank system;
- FIG. 6: shows a coupling between the frame and the gripper;
- FIG. 7: illustrates a holding mechanism for the buoys;
- FIG. 8: illustrates the vehicle in the process of detaching a buoy from a riser in a) a first perspective, b) second perspective and c) in an enlarged view.

### DETAILED DESCRIPTION / PREFERRED EMBODIMENT

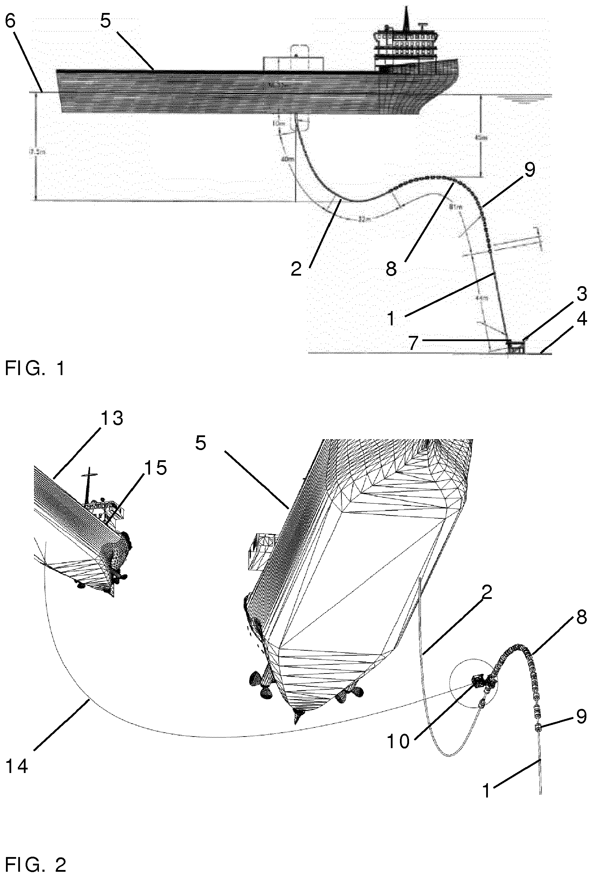

FIG. 1 illustrates a riser 1 with a flow line 2 between a station 3 at the sea bed 4 and a ship 5 at the surface 6 of the sea. A riser flow line 2 extends relatively steeply from an anchoring point 7 at the sea bed 4 up to a floating part 8 of the riser 1. The floating part 8 comprises a plurality of buoys 9 attached to the flow line 2. As an alternative to the ship 5, the riser 1 could also extend to a stationary surface construction, for example a platform.

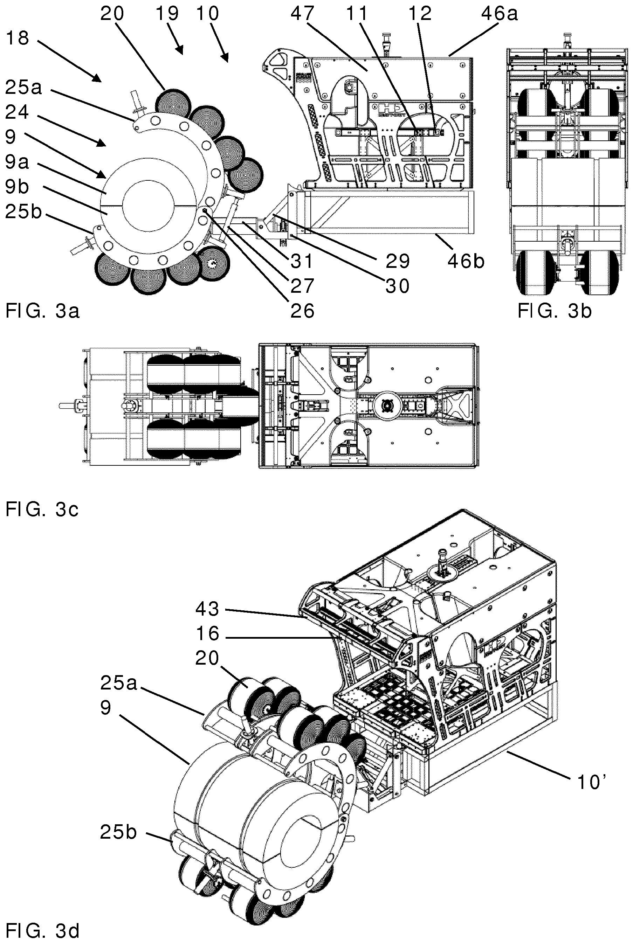

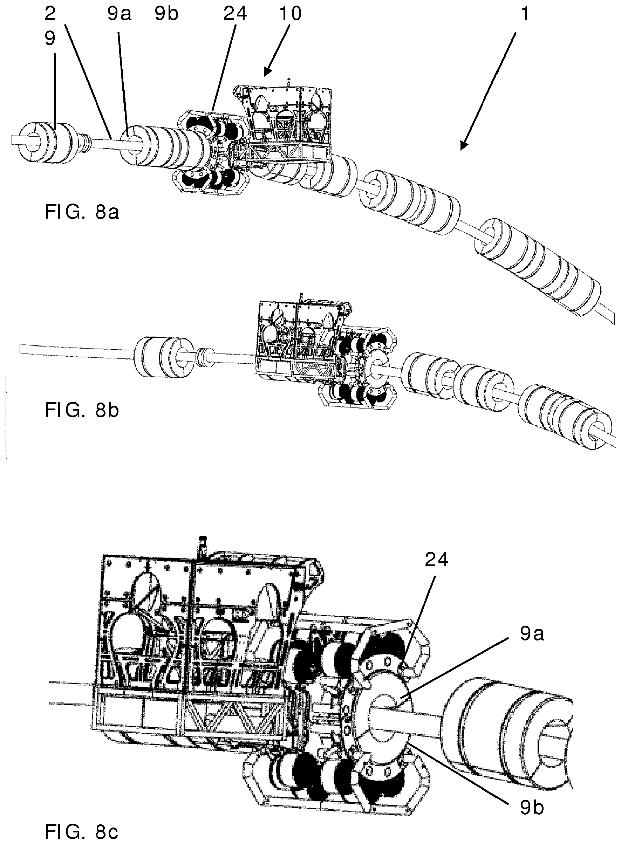

FIG. 2 illustrates a system for removal and attachment of buoys 9 to the flow line 2. The system comprises an underwater operating vehicle 10 for transportation of buoys 9 under sea level and for removal and attachments of the buoys 9 to the flow line 2. The underwater vehicle 10 in operation when gripping buoys is seen in greater detail in FIG. 8b. With reference to FIG. 3a, the vehicle 10 comprises a propulsion system 11, for example propellers or jet thrusters, as well as a steering system 12 for in cooperation moving the vehicle 10 safely controlled under water. The vehicle 10 is unmanned and steered by remote control by operational control signals transmitted to the remotely operated vehicle (ROV) from a control vessel 13 through an umbilical 14 connecting a control centre 15 on the control vessel 13 with the vehicle 10.

With reference to FIG. 2 and FIG. 3d, the vehicle 10 comprises an illumination system 43 and a video camera system 16 that is capturing the surroundings of the vehicle 10 in order for the control centre 15 to follow the operation of the vehicle 10 and to give corresponding operational control commands to the vehicle 10 via the umbilical 14 in order to accomplish the mission at the flow line 2 at the floating part 8 of the riser 1 under the ship 5. As illustrated, the vehicle 10 is capable of manoeuvring under the ship 5 and approach the flow line 2 with the plurality of buoys 9, even where the flow line 2 is underneath the ship 5 and, therefore, difficult accessible from above.

Alternatively, the vehicle 10 is operating autonomously and not connected to the control vessel 13. In this case, a computer of the vehicle 10 is programmed to steer the vehicle 10 to a certain underwater location and perform the necessary operation in accordance with the programming and supported by evaluation of the video recording taken continuously by the camera system of the vehicle 10.

In the following, the operation of the vehicle 10 is explained with respect to control signals received by the vehicle through the umbilical 14, but it is understood that a similar operation could be performed autonomously by the computer on board of the vehicle 10 instead of the control centre 15 on the control vessel 13, where human control, command, and intervention typically takes place.

FIG. 3 shows the vehicle 10 in greater detail in a) side view, b) end view, c) top view, and d) perspective view. The vehicle 10 comprises a gripper system 18 dimensioned and configured for gripping buoys 9 of the size and shape as used on deep sea risers.

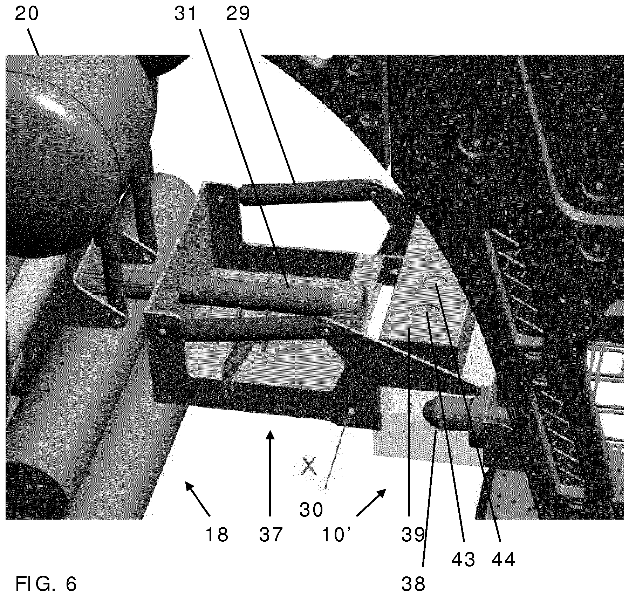

As best seen in FIG. 3a and Fig. 3d, a buoy is placed between the open jaws 25a, 25b of the gripper 24. The jaws 25a, 25b are opened and closed by a linear actuator 27 causing the two jaws 25a, 25b to mutually rotate about the hinge 26. As shown in FIG. 3 a and in greater detail in the partial drawing in FIG. 6, the gripper 24 can be tilted up and down by the combination of a tilt hinge 30 and linear tilt actuator 29. Rotation of the gripper 24 is accomplished about rotation axle 31.

Such buoys 9 have buoyancy in the order of 500-1500 kg, which implies that the vehicle 10 must comprise a correspondingly heavy underwater weight in order to perform a controlled take up and delivery of such buoys 9. On the other hand, manoeuvring of the vehicle 10 under water without a buoy 9 in the gripper 24 should not be hampered due to an unnecessarily overheavy vehicle 10. For this reason, the vehicle 10 is equipped with a buoyancy adjustment system 19 where a plurality of tanks 20 are controllably filled with an amount of water and gas in varying volume ratios, dependent on the desired buoyancy. The tanks 20 are provided on the gripper 24 in order to adjust the buoyancy of the gripper 24 in dependent on a buoy 9 with weight or buoyancy being held in the gripper 24.

The system as illustrated in FIG. 3 is suitable for an assembly kit in which a gripper system 18 is mounted onto a gripper-free vehicle part 47, for example multi-purpose standard gripper-free underwater vehicle, such as AUV (autonomous underwater vehicle) or ROV (remotely operated vehicle), as part of customization. The gripper-free vehicle part 47 comprises an upper frame part 46a. To this upper frame part 46a, there is attached a lower frame part 46b. This lower frame part 46b carries the gripper system 18. Together, the upper frame part 46a and the lower frame part 46b constitute a frame 10' of the underwater vehicle 10. In a kit comprising a gripper system 18 for a multi-purpose standard gripper-free underwater vehicle, the lower frame part 46b can be part of such kit. In this case, the lower frame part 46b is mounted onto the gripper free vehicle as a first step. In order for the lower frame part to be floating under water, it is equipped with a buoyancy system. As the weight of the lower frame part 46b is not changing, the buoyancy system for the lower frame part 46b can be non-adjustable, for example provided with foam-filled containers.

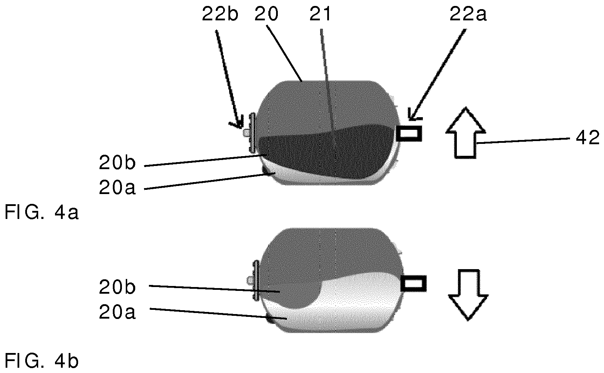

FIG. 4a and 4b illustrates an exemplary embodiment. Each of the tanks 20 is divided into two compartments, a first compartment 20a for water and a second compartment 20b for gas, wherein the two compartments 20a, 20b are mutually separated by a flexible membrane 21, for example, as illustrated, a resilient inflatable bladder. The tank 20 has a water inlet/outlet 22a to the first compartment 20a and a gas inlet/outlet 22b to the second compartment 20b. Pumping gas into the second compartment 20b presses water out of the first compartment 20a, increasing the buoyancy 42 of the tank 20, which is illustrated in FIG. 4a as compared to FIG. 4b where the second compartment 20b is smaller. Release of gas from the second compartment 20b allows more water to flow into the first compartment 20a. The gas for the tank 20 is provided from a container that contains the gas under pressurised conditions in order for the gas to be able to press out the water from the first compartment 20a.

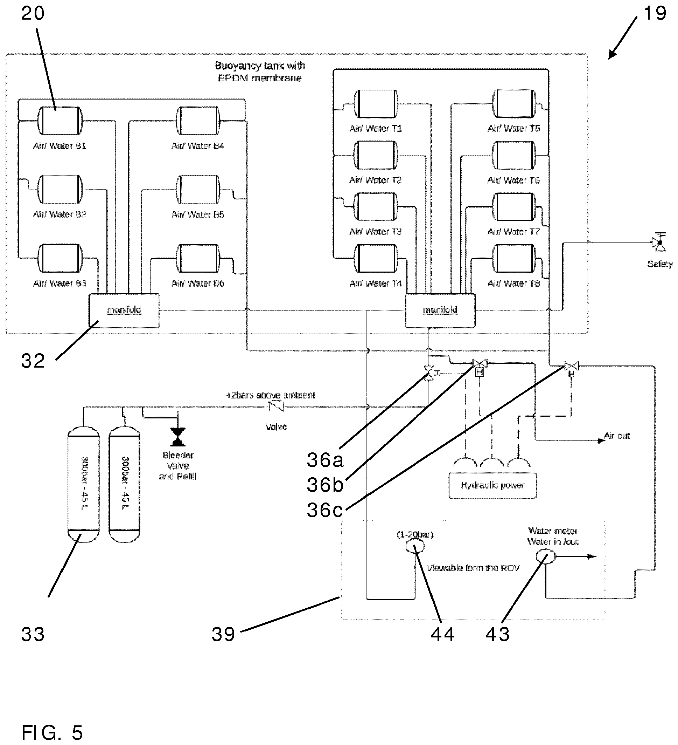

FIG. 5 illustrates components of the buoyancy adjustment system 19. Two sets of tanks 20 are filled independently of each other with pressurised gas from gas reservoirs 33 through two manifolds 32. A first hydraulically operated valve 36a is used for filling pressurised gas into the manifolds, a second hydraulically operated valve 36b is used for releasing the gas from the tanks 20, and a third hydraulically operated valve 36c is used for the water flow in and out of the tanks 20 in dependence on the volume left in the first compartment 20a of the respective tanks 20 after filling pressurised gas in the second compartment 20b on one side of the membrane 21. Instead of hydraulically controlling the valves 36a, 36b, 36c, they could be controlled pneumatically. A water meter 43 and a pressure meter 44 are viewable in a panel 39 by a camera.

For example, the two gas reservoirs 33 have a volume of 45 litre and are filled with gas at a pressure of 300 bars. With correspondingly dimensioned tanks 20, the vehicle may empty the tanks from water twice at a depth of 150 m.

FIG. 6 illustrates the coupling 37 between the vehicle frame 10' and the gripper system 18 in greater detail with the tilt actuator 29, the tilt hinge 30 and the rotation axle 31. The vehicle comprises a latch system 38 hydraulic flow connectors for quick connection, and the gripper system 18 comprises a cooperating panel 39. The panel 39 also comprises various meters, including the water meter 43 for the ballast water and the air pressure meter 44, and potentially further meters, such as hydraulic pressure meters. These meters are video captured by the camera system, the signal of which is transmitted to the control centre 15 on the control vessel via the umbilical 14. This results in a very simple and reliable data transfer system with minimized risk for failure.

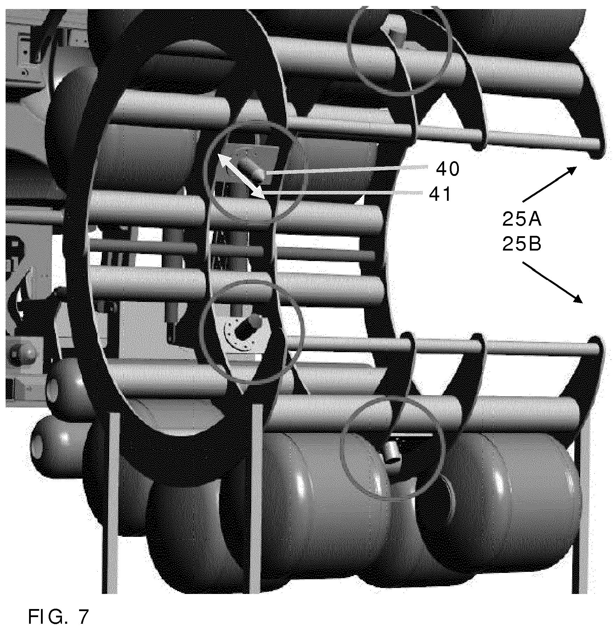

FIG. 7 shows the jaws 25a, 25b in greater detail. The jaws 25a, 25b are provided with a holding mechanism for holding the buoys. For the holding the buoy, the jaws 25a, 25b are provided with pins 40 for cooperating with the buoys 9. As indicated in in FIG. 3a and FIG. 3d, the buoy 9 consists of two halves 9a, 9b in order for the buoy 9 to be placed around the flow line 2. FIG. 8a, 8b, and 8c show the vehicle 10 in the process of holding the gripper 24 around a buoy 9, where the two halves 9a, 9b of the buoy 9 are enclosing the flow line 2 on a riser 1. For attachment and detachment, the two buoy halves 9a, 9b have to be separated a distance sufficient for the flow line 2 to fit into the central hollow part of the buoy 9. By engaging the pins 40 with either buoy half 9a, 9b, the two halves are secured to either jaw 25a, 25b, and the opening action of the jaws, once engagement has been made with the buoy 9 by the gripper, the jaws can be used to force the two buoy halves 9a, 9b apart for release from the flow line 2 or for attachment thereto. In order to provide a secure holding, the pins 40 can be moved hydraulically towards and away from the buoy, which is indicated by double arrow 41 in FIG. 7. Typically, the buoys would be provided with pin receivers for cooperating with the pins when the buoys are to be installed. However, the pins can also be used for de-installation of types of buoys without pin receivers, in which case the pins are used for puncturing the skin of the buoys.

### Numbering

1 riser
2 flow line
3 station at sea bed 4
4 sea bed
5 ship
6 surface
7 anchoring point
8 floating part
9 buoys
9a, 9b First and second half of buoy 9
10 vehicle
10' vehicle frame with upper vehicle frame part 46a and lower vehicle frame part 46b
11 propulsion system
12 steering system
13 control vessel
14 umbilical
15 control centre on control vessel
16 camera system
17 controller on vehicle 10
18 gripper system
19 buoyancy adjustment system
20 water fillable tanks of buoyancy adjustment system 19
20a, 20b, first and second compartment in tank 20 separated by membrane 21
21 membrane in compartment
22a water inlet/outlet of first compartment 20a
22b water inlet/outlet of second compartment 20b
23 container with pressurised gas
24 gripper in gripper system 18
25a, b jaws of gripper 24
26 hinge between jaws
27 actuator for opening and closing jaws 25a, b
28 rotational axle for gripper 24
29 tilt actuator
30 tilt hinge
31 rotation axle
32 manifolds for filling tanks 20
33 pressurised gas reservoirs
34 water inlet and outlet
35 gas outlet
36a, 36b, 36c hydraulically operated valves for gas filling and release and water flow
37 coupling between vehicle 10 and gripper system 18
38 latch system with hydraulic flow connectors
39 panel on gripper system 18 cooperating with hydraulic flow connectors 38
40 longitudinally movable pins in jaws
41 double arrow illustrating direction of motion of pins 40
42 buoyancy
43 water meter
44 pressure meter
45 illumination system
46 vehicle frame
46a upper vehicle frame part
46b lower vehicle frame part
47 gripper-free vehicle part

## Claims

1. A method of installing a buoy (9) onto an underwater construction (1), the method comprising,
providing an underwater vehicle (10) configured for underwater operation and transport of buoys (9) under sea level (6); wherein the vehicle (10) comprises a propulsion and steering system for manoeuvring the vehicle (10) and a buoyancy adjustment system (19) for adjusting the buoyancy of the vehicle (10) during underwater operation; wherein the vehicle (10) comprises a vehicle frame (10') and a gripper system (18) extending from the frame (10'); the gripper system (18) comprising a gripper (24) for gripping and releasing a buoy (9), the gripper system (18) further comprising an adjustment mechanism (29, 30, 31) for adjusting the gripper (24) orientation relatively to the vehicle frame (10') for installing a buoy (9) in controlled orientation onto a construction or for de-installing the buoy (9) therefrom; wherein the method further comprises:
providing a buoy (9) in the gripper (24);
navigating the vehicle (10) with the buoy (9) to the underwater construction (1);
determining a location on the underwater construction (1) for installing the buoy (9);
determining a specific necessary orientation and position of the buoy (9) for installing;
adjusting the gripper (24) relatively to the vehicle frame (10') in order for the actual orientation of the buoy (9) in the gripper (24) to match the specific necessary orientation of the buoy;
navigating the vehicle (10) with the buoy (9) in the gripper (24) to match the specific necessary position of the buoy (9); and
installing the buoy (9) at the construction (1) in the specific necessary orientation and position; **characterized in that**
the buoyancy adjustment system (19) is arranged on the gripper system (18) remotely from the frame (10') for adjusting the buoyancy of the vehicle (10) during underwater operation;
the buoyancy adjustment system (19) comprises two sets of tanks (20) capable of specific buoyancy adjustment of the gripper (24) independently of each other;
increasing the buoyance of the buoyancy adjustment system (18) to a level corresponding to the buoyancy of the buoy (9); and
releasing the buoy (9) from the gripper (24).

2. The method according to claim 1, where in the underwater construction (1) is located at least partly under a ship (5) or under a stationary surface installation, and wherein the method comprises navigating the vehicle (10) under the ship (5) or the stationary surface installation to the construction (1) and installing a buoy (9) onto the construction (1) at a location under the ship (5) or stationary surface installation.

3. The method according to claim 2, wherein the underwater construction is a flexible underwater line (1, 2) extending from a seabed (4) to the ship (5) or other surface installation.

4. The method according to any one of the claims 1-3, wherein the method comprises providing the gripper (24) with two hinged jaws (25a, 25b) for gripping the buoy (9), wherein each jaw (25a, 25b) comprises a holding mechanism (40) for engaging with one half (9a, 9b) of a buoy (9) and for pulling two halves (9a, 9b) of the buoy (9) apart by opening the jaws (25a, 25b); the method further comprising activating the holding mechanism (40) and engaging each one of the two jaws (25a, 25b) with one of the two halves (9a, 9b) of the buoy (9) and pulling the two halves (9a, 9b) of the buoy (9) apart by opening the jaws (25a, 25b), navigating the vehicle (10) to the specific necessary installation position of the buoy (9) and by closing the two jaws (25a, 25b) bringing the two halves (9a, 9b) of the buoy (9) together around a part of the construction for thereby fixing the buoy (9) to the construction; disengaging the holding mechanism (40) from the buoy (9) and opening the gripper (24) without pulling the two halves (9a, 9b) of the buoy (9) apart and thereby releasing the buoy (9) from the gripper (24).

5. An underwater buoy installation and de-installation system (10), the system comprising an underwater vehicle (10) configured for underwater operation and transport of buoys (9) under sea level (6); wherein the vehicle (10) comprises a propulsion and steering system for manoeuvring the vehicle and a buoyancy adjustment system (19) for adjusting the buoyancy of the vehicle (10) during underwater operation; wherein the vehicle (10) comprises a vehicle frame (10') and a gripper system (18) extending from the frame (10'); the gripper system (18) comprising a gripper (24) for gripping and releasing a buoy (9), the gripper system (18) further comprising an adjustment mechanism (29, 30, 31) for adjusting the gripper (24) orientation relatively to the vehicle frame (10') for installing a buoy (9) in controlled orientation and position onto an underwater construction or for de-installing the buoy (9) therefrom, **characterized in that** the buoyancy adjustment system (19) is arranged on the gripper system (18) remotely from the frame (10') for adjusting the buoyancy of the vehicle (10) during underwater operation; the buoyancy adjustment system (19) comprises two sets of tanks (20) capable of specific buoyancy adjustment of the gripper (24) independently of each other.

6. The system according to claim 5, wherein the buoyancy adjustment system (19) comprises a plurality of water tanks (29) attached to the gripper (24) remotely from the frame (10'), wherein each water tank (20) is divided into a first compartment (20a) for water and a second compartment (20b) for gas, the two compartments (20a, 20b) being mutually separated by a flexible membrane (21) and configured for filling of pressurised gas into the second compartment (20b) to exert pressure on the membrane and thereby pressing water out of the first compartment (24a) in order to increase buoyancy of the vehicle (10).

7. The system according to claim 6, further comprising a surface control vessel (13) and an umbilical (14) that is connecting the control vessel (13) with the vehicle (10); wherein a control centre (15) is provided on the control vessel (13) for remotely controlling manoeuvring and operation of the vehicle (10); wherein the vehicle (10) further comprises a controller system (17) functionally connected to the propulsion and steering system and to the adjustment mechanism (29, 30, 31), the controller system (17) being configured for receiving operational commands from the control centre (15) for propulsion and steering and for adjusting the orientation of the gripper (24) and for gripping and releasing a buoy (9); wherein the umbilical (14) comprises a signal transmission line from the control centre (15) to the controller (17) for transmission of the operational commands; wherein the system comprises a gas system (32, 33) for providing pressurised gas to the tanks (20) and a pressure meter (44) with a pressure display for displaying the actual gas pressure in the gas system (32, 33); wherein a camera system is configured for imaging the pressure display and for transmission of the corresponding digital image data via the umbilical to the control centre (15) on the control vessel (13) for display thereof.

8. The system according to any one of the claims 5-7, wherein the gripper (24) comprises two hinged jaws (25a, 25b) for gripping a buoy (9), wherein each jaw (25a, 25b) comprises a holding mechanism for engaging with one half (9a, 9b) of a buoy (9) and for pulling two halves (9a, 9b) of the buoy (9) apart by opening the jaws (25a, 25b) for thereby releasing the buoy (9) from the flexible underwater line or for attaching the buoy.

9. The system according to claim 8, wherein the holding mechanism comprises a movable pin (40) that is movable towards and away from the buoy (9) when the buoy (9) is abutting the jaws (25a, 25b) for engaging with a cooperating receiver element in the buoy (9).

10. The system according to claim 8 or 9, wherein a first set of tanks (20) are arranged around the jaws (25a, 25b) to form a circumference towards a first end of the gripper (24); and a second set of tanks (20) are arranged around the jaws (25a, 25b) to form a circumference towards an opposite second end of the gripper; each one of the two sets of tanks (20) being individually adjustable.

11. The system according to any one of the claims 5-10 , wherein the orientation adjustment mechanism (29, 30, 31) comprises a coupling (37) between the frame (10') and the gripper (24), the coupling (37) comprising a tilt hinge (30) and a tilt actuator for tilting the gripper (24) relatively to the frame (10') about the tilt hinge (30), the coupling (37) further comprising a rotation axle (31) normal to a rotational direction of the hinge (30) for rotation of the gripper (24) relatively to the frame (10').

12. A method for assembling a system according to any one of the claims 5-11, the method comprising, providing a gripper-free underwater vehicle with a propulsion and steering system for manoeuvring the vehicle but without a gripper system (18) and submerging the gripper-free vehicle (10) under sea level (6); providing a gripper system (18) separately from the gripper-free vehicle and submerging the gripper system (18) under sea level adjacent to the gripper-free vehicle; adjusting the buoyancy of the gripper system (18) to largely neutral buoyancy of the gripper system (18); mounting the gripper system (18) onto the gripper-free vehicle while submerged in water.

13. An assembly kit comprising a system according to any one of the claims 5-12, the kit further comprising
a gripper-free underwater vehicle with a propulsion and steering system for manoeuvring the vehicle but without a gripper system (18);
a gripper system (18) separately from the gripper-free vehicle, the gripper system comprising a gripper (24) and a connector for connecting of the gripper to the gripper-free underwater vehicle; and the gripper system comprising an adjustment mechanism (29, 30, 31) between the connector and the gripper for adjusting the gripper (24) orientation relatively to the connector.

14. An assembly kit according to claim 13, the gripper system further comprising an buoyancy adjustment system (18) for adjusting the buoyancy of the gripper (24).

15. Use of a system according to any one of the claims 5-12 for installation or de-installation of a buoy (9) on a flexible underwater line located underneath a ship (5) or other surface installation at sea level (6).

## Patentansprüche

1. Verfahren zum Installieren einer Boje (9) auf einer Unterwasserkonstruktion (1), wobei das Verfahren Folgendes umfasst:
Bereitstellen eines Unterwasserfahrzeugs (10), das für den Unterwasserbetrieb und den Transport von Bojen (9) unter dem Meeresspiegel (6) konfiguriert ist; wobei das Fahrzeug (10) ein Antriebs- und Lenksystem zum Manövrieren des Fahrzeugs (10) und ein Auftriebseinstellsystem (19) zum Einstellen des Auftriebs des Fahrzeugs (10) während des Unterwasserbetriebs umfasst;
wobei das Fahrzeug (10) einen Fahrzeugrahmen (10') und ein Greifersystem (18), das sich von dem Rahmen (10') erstreckt, umfasst; wobei das Greifersystem (18) einen Greifer (24) zum Greifen und Lösen einer Boje (9) umfasst, wobei das Greifersystem (18) ferner einen Einstellmechanismus (29, 30, 31) zum Einstellen der Ausrichtung des Greifers (24) relativ zu dem Fahrzeugrahmen (10') zum Installieren einer Boje (9) in gesteuerter Ausrichtung auf einer Konstruktion oder zum Deinstallieren der Boje (9) davon umfasst; wobei das Verfahren ferner Folgendes umfasst:
Bereitstellen einer Boje (9) in dem Greifer (24);
Navigieren des Fahrzeugs (10) mit der Boje (9) zur Unterwasserkonstruktion (1);
Bestimmen eines Standorts auf der Unterwasserkonstruktion (1) zum Installieren der Boje (9);
Bestimmen einer spezifisch erforderlichen Ausrichtung und Position der Boje (9) zum Installieren;
Einstellen des Greifers (24) relativ zu dem Fahrzeugrahmen (10'), so dass die tatsächliche Ausrichtung der Boje (9) in dem Greifer (24) der spezifisch erforderlichen Ausrichtung der Boje entspricht;
Navigieren des Fahrzeugs (10) mit der Boje (9) in dem Greifer (24), um der spezifisch erforderlichen Position der Boje (9) zu entsprechen; und
Installieren der Boje (9) an der Konstruktion (1) in der spezifisch erforderlichen Ausrichtung und Position; **dadurch gekennzeichnet, dass**
das Auftriebseinstellsystem (19) auf dem Greifersystem (18) entfernt von dem Rahmen (10') angeordnet ist, um den Auftrieb des Fahrzeugs (10) während des Unterwasserbetriebs einzustellen;
das Auftriebseinstellsystem (19) zwei Sätze von Tanks (20) umfasst, die unabhängig voneinander eine spezifische Auftriebseinstellung des Greifers (24) ermöglichen;
Erhöhen des Auftriebs des Auftriebseinstellsystems (18) auf ein Niveau, das dem Auftrieb der Boje (9) entspricht; und
Lösen der Boje (9) von dem Greifer (24).

2. Verfahren nach Anspruch 1, wobei sich die Unterwasserkonstruktion (1) mindestens teilweise unter einem Schiff (5) oder unter einer stationären Überwasserinstallation befindet und wobei das Verfahren das Navigieren des Fahrzeugs (10) unter dem Schiff (5) oder der stationären Überwasserinstallation zu der Konstruktion (1) und das Installieren einer Boje (9) auf der Konstruktion (1) an einem Standort unter dem Schiff (5) oder der stationären Überwasserinstallation umfasst.

3. Verfahren nach Anspruch 2, wobei die Unterwasserkonstruktion eine flexible Unterwasserleitung (1, 2) ist, die sich von einem Meeresboden (4) bis zu dem Schiff (5) oder einer anderen Überwasserinstallation erstreckt.

4. Verfahren nach einem der Ansprüche 1-3, wobei das Verfahren das Bereitstellen des Greifers (24) mit zwei Gelenkbacken (25a, 25b) zum Greifen der Boje (9) umfasst, wobei jede Backe (25a, 25b) einen Haltemechanismus (40) zum Eingreifen in eine Hälfte (9a, 9b) einer Boje (9) und zum Auseinanderziehen von zwei Hälften (9a, 9b) der Boje (9) durch Öffnen der Backen (25a, 25b) umfasst; wobei das Verfahren ferner das Aktivieren des Haltemechanismus (40) und das Eingreifen jeder der beiden Backen (25a, 25b) in eine der beiden Hälften (9a, 9b) der Boje (9) und das Auseinanderziehen der beiden Hälften (9a, 9b) der Boje (9) durch Öffnen der Backen (25a, 25b), Navigieren des Fahrzeugs (10) zur spezifisch erforderlichen Installationsposition der Boje (9) und Zusammenbringen der beiden Hälften (9a, 9b) der Boje (9) um einen Teil der Konstruktion durch Schließen der beiden Backen (25a, 25b), um dadurch die Boje (9) an der Konstruktion zu befestigen, umfasst; Lösen des Haltemechanismus (40) von der Boje (9) und Öffnen des Greifers (24), ohne die beiden Hälften (9a, 9b) der Boje (9) auseinanderzuziehen, und dadurch Lösen der Boje (9) von dem Greifer (24).

5. Unterwasserbojeninstallations- und -deinstallationssystem (10), wobei das System ein Unterwasserfahrzeug (10) umfasst, das für den Unterwasserbetrieb und den Transport von Bojen (9) unter dem Meeresspiegel (6) konfiguriert ist; wobei das Fahrzeug (10) ein Antriebs- und Lenksystem zum Manövrieren des Fahrzeugs und ein Auftriebseinstellsystem (19) zum Einstellen des Auftriebs des Fahrzeugs (10) während des Unterwasserbetriebs umfasst; wobei das Fahrzeug (10) einen Fahrzeugrahmen (10') und ein Greifersystem (18), das sich von dem Rahmen (10') erstreckt, umfasst; wobei das Greifersystem (18) einen Greifer (24) zum Greifen und Lösen einer Boje (9) umfasst, wobei das Greifersystem (18) ferner einen Einstellmechanismus (29, 30, 31) zum Einstellen der Ausrichtung des Greifers (24) relativ zu dem Fahrzeugrahmen (10') zum Installieren einer Boje (9) in gesteuerter Ausrichtung und Position auf einer Unterwasserkonstruktion oder zum Deinstallieren der Boje (9) davon umfasst, **dadurch gekennzeichnet, dass** das Auftriebseinstellsystem (19) an dem Greifersystem (18) entfernt von dem Rahmen (10') zum Einstellen des Auftriebs des Fahrzeugs (10) während des Unterwasserbetriebs angeordnet ist; wobei das Auftriebseinstellsystem (19) zwei Sätze von Tanks (20) umfasst, die unabhängig voneinander eine spezifische Auftriebseinstellung des Greifers (24) ermöglichen.

6. System nach Anspruch 5, wobei das Auftriebseinstellsystem (19) eine Vielzahl von Wassertanks (29) umfasst, die an dem Greifer (24) entfernt von dem Rahmen (10') befestigt ist, wobei jeder Wassertank (20) in eine erste Kammer (20a) für Wasser und eine zweite Kammer (20b) für Gas unterteilt ist, wobei die beiden Kammern (20a, 20b) durch eine flexible Membran (21) voneinander getrennt und zum Befüllen der zweiten Kammer (20b) mit Druckgas konfiguriert sind, um Druck auf die Membran auszuüben und dadurch Wasser aus der ersten Kammer (24a) herauszudrücken, um den Auftrieb des Fahrzeugs (10) zu erhöhen.

7. System nach Anspruch 6, ferner umfassend ein Überwassersteuerschiff (13) und eine Versorgungsleitung (14), die das Steuerschiff (13) mit dem Fahrzeug (10) verbindet; wobei ein Steuerzentrum (15) auf dem Steuerschiff (13) bereitgestellt ist, um das Manövrieren und den Betrieb des Fahrzeugs (10) fernzusteuern; wobei das Fahrzeug (10) ferner ein Steuerungssystem (17) umfasst, das funktionell mit dem Antriebs- und Lenksystem und dem Einstellmechanismus (29, 30, 31) verbunden ist, wobei das Steuerungssystem (17) konfiguriert ist, um Betriebsbefehle von dem Steuerzentrum (15) zum Antreiben und Lenken und zum Einstellen der Ausrichtung des Greifers (24) und zum Greifen und Lösen einer Boje (9) zu empfangen; wobei die Versorgungsleitung (14) eine Signalübertragungsleitung von dem Steuerzentrum (15) zur Steuerung (17) zum Übertragen der Betriebsbefehle umfasst; wobei das System ein Gassystem (32, 33) zum Bereitstellen von Druckgas an die Tanks (20) und einen Druckmesser (44) mit einer Druckanzeige zum Anzeigen des tatsächlichen Gasdrucks in dem Gassystem (32, 33) umfasst; wobei ein Kamerasystem konfiguriert ist, um die Druckanzeige abzubilden und um die entsprechenden digitalen Bilddaten über die Versorgungsleitung an das Steuerzentrum (15) auf dem Steuerschiff (13) zu übertragen, um diese anzuzeigen.

8. System nach einem der Ansprüche 5-7, wobei der Greifer (24) zwei Gelenkbacken (25a, 25b) zum Greifen einer Boje (9) umfasst, wobei jede Backe (25a, 25b) einen Haltemechanismus zum Eingreifen in eine Hälfte (9a, 9b) einer Boje (9) und zum Auseinanderziehen von zwei Hälften (9a, 9b) der Boje (9) durch Öffnen der Backen (25a, 25b), um dadurch die Boje (9) von der flexiblen Unterwasserleitung zu lösen oder die Boje zu befestigen, umfasst.

9. System nach Anspruch 8, wobei der Haltemechanismus einen beweglichen Stift (40) umfasst, der in Richtung der Boje (9) und von dieser weg beweglich ist, wenn die Boje (9) an den Backen (25a, 25b) anliegt, um mit einem zusammenwirkenden Empfängerelement in der Boje (9) in Eingriff zu treten.

10. System nach Anspruch 8 oder 9, wobei ein erster Satz von Tanks (20) um die Backen (25a, 25b) angeordnet ist, um einen Umfang in Richtung eines ersten Endes des Greifers (24) zu bilden; und ein zweiter Satz von Tanks (20) um die Backen (25a, 25b) angeordnet ist, um einen Umfang in Richtung eines gegenüberliegenden zweiten Endes des Greifers zu bilden; wobei jeder der beiden Sätze von Tanks (20) individuell einstellbar ist.

11. System nach einem der Ansprüche 5-10, wobei der Ausrichtungseinstellmechanismus (29, 30, 31) eine Kopplung (37) zwischen dem Rahmen (10') und dem Greifer (24) umfasst, wobei die Kopplung (37) ein Kippgelenk (30) und einen Kippaktuator zum Kippen des Greifers (24) relativ zu dem Rahmen (10') um das Kippgelenk (30) umfasst, wobei die Kopplung (37) ferner eine Drehachse (31) senkrecht zu einer Drehrichtung des Gelenks (30) zum Drehen des Greifers (24) relativ zum Rahmen (10') umfasst.

12. Verfahren zum Montieren eines Systems nach einem der Ansprüche 5-11, wobei das Verfahren das Bereitstellen eines greiferfreien Unterwasserfahrzeugs mit einem Antriebs- und Lenksystem zum Manövrieren des Fahrzeugs, jedoch ohne ein Greifersystem (18), und das Untertauchen des greiferfreien Fahrzeugs (10) unter den Meeresspiegel (6); das Bereitstellen eines Greifersystems (18) getrennt von dem greiferfreien Fahrzeug und das Untertauchen des Greifersystems (18) unter den Meeresspiegel neben dem greiferfreien Fahrzeug; das Einstellen des Auftriebs des Greifersystems (18) auf einen weitgehend neutralen Auftrieb des Greifersystems (18); das Anbringen des Greifersystems (18) an dem greiferfreien Fahrzeug, während es unter Wasser getaucht ist, umfasst.

13. Montagekit, umfassend ein System nach einem der Ansprüche 5-12, wobei der Kit ferner Folgendes umfasst:
ein greiferfreies Unterwasserfahrzeug mit einem Antriebs- und Lenksystem zum Manövrieren des Fahrzeugs, jedoch ohne ein Greifersystem (18);
ein Greifersystem (18) getrennt von dem greiferfreien Fahrzeug, wobei das Greifersystem einen Greifer (24) und einen Verbinder zum Verbinden des Greifers mit dem greiferfreien Unterwasserfahrzeug umfasst; und wobei das Greifersystem einen Einstellmechanismus (29, 30, 31) zwischen dem Verbinder und dem Greifer zum Einstellen der Ausrichtung des Greifers (24) relativ zu dem Verbinder umfasst.

14. Montagekit nach Anspruch 13, wobei das Greifersystem ferner ein Auftriebseinstellsystem (18) zum Einstellen des Auftriebs des Greifers (24) umfasst.

15. Verwendung eines Systems nach einem der Ansprüche 5-12 zum Installieren oder Deinstallieren einer Boje (9) an einer unter einem Schiff (5) oder einer anderen Überwasserinstallation auf Meeresspiegel (6) befindlichen flexiblen Unterwasserleitung.

## Revendications

1. Procédé d'installation d'une bouée (9) sur une construction sous-marine (1), le procédé comprenant,
la fourniture d'un véhicule sous-marin (10) configuré pour un fonctionnement sous-marin et le transport de bouées (9) sous le niveau de la mer (6) ; dans lequel le véhicule (10) comprend un système de propulsion et de gouverne pour manœuvrer le véhicule (10) et un système de réglage de flottabilité (19) pour régler la flottabilité du véhicule (10) au cours d'un fonctionnement sous-marin ; dans lequel le véhicule (10) comprend un châssis de véhicule (10') et un système d'organe de préhension (18) s'étendant à partir du châssis (10') ; le système d'organe de préhension (18) comprenant un organe de préhension (24) pour la préhension et la libération d'une bouée (9), le système d'organe de préhension (18) comprenant en outre un mécanisme de réglage (29, 30, 31) pour régler l'orientation de l'organe de préhension (24) par rapport au châssis de véhicule (10') pour installer une bouée (9) dans une orientation contrôlée sur une construction ou pour désinstaller la bouée (9) de celle-ci ; dans lequel le procédé comprend en outre :
la fourniture d'une bouée (9) dans l'organe de préhension (24) ;
la navigation du véhicule (10) avec la bouée (9) jusqu'à la construction sous-marine (1) ;
la détermination d'un emplacement sur la construction sous-marine (1) pour installer la bouée (9) ;
la détermination d'une orientation et d'une position nécessaires spécifiques de la bouée (9) pour l'installation ;
le réglage de l'organe de préhension (24) par rapport au châssis de véhicule (10') afin que l'orientation réelle de la bouée (9) dans l'organe de préhension (24) concorde avec l'orientation nécessaire spécifique de la bouée ;
la navigation du véhicule (10) avec la bouée (9) dans l'organe de préhension (24) pour concorder avec la position spécifique nécessaire de la bouée (9) ; et
l'installation de la bouée (9) au niveau de la construction (1) dans l'orientation et la position nécessaires spécifiques ; **caractérisé en ce que**
le système de réglage de flottabilité (19) est agencé sur le système d'organe de préhension (18) à distance du châssis (10') pour régler la flottabilité du véhicule (10) au cours d'un fonctionnement sous-marin ;
le système de réglage de flottabilité (19) comprend deux ensembles de réservoirs (20) capables d'un réglage de flottabilité spécifique de l'organe de préhension (24) indépendamment l'un de l'autre ;
l'augmentation de la flottabilité du système de réglage de flottabilité (18) jusqu'à un niveau correspondant à la flottabilité de la bouée (9) ; et
la libération de la bouée (9) de l'organe de préhension (24).

2. Procédé selon la revendication 1, dans lequel la construction sous-marine (1) est située au moins en partie sous un bateau (5) ou sous une installation de surface stationnaire, et dans lequel le procédé comprend la navigation du véhicule (10) sous le bateau (5) ou l'installation de surface stationnaire jusqu'à la construction (1) et l'installation d'une bouée (9) sur la construction (1) à un emplacement sous le bateau (5) ou l'installation de surface stationnaire.

3. Procédé selon la revendication 2, dans lequel la construction sous-marine est une ligne sous-marine flexible (1, 2) s'étendant d'un plancher océanique (4) au bateau (5) ou à une autre installation de surface.

4. Procédé selon l'une quelconque des revendications 1 à 3, dans lequel le procédé comprend le fait de munir l'organe de préhension (24) de deux mâchoires articulées (25a, 25b) pour la préhension de la bouée (9), dans lequel chaque mâchoire (25a, 25b) comprend un mécanisme de maintien (40) pour venir en prise avec une moitié (9a, 9b) d'une bouée (9) et pour écarter deux moitiés (9a, 9b) de la bouée (9) par l'ouverture des mâchoires (25a, 25b) ; le procédé comprenant en outre l'activation du mécanisme de maintien (40) et la mise en prise de chacune des deux mâchoires (25a, 25b) avec l'une des deux moitiés (9a, 9b) de la bouée (9) et l'écartement des deux moitiés (9a, 9b) de la bouée (9) par l'ouverture des mâchoires (25a, 25b), la navigation du véhicule (10) jusqu'à la position d'installation nécessaire spécifique de la bouée (9) et, par la fermeture des deux mâchoires (25a, 25b), le rapprochement des deux moitiés (9a, 9b) de la bouée (9) autour d'une partie de la construction pour ainsi fixer la bouée (9) à la construction ; la désolidarisation du mécanisme de maintien (40) à partir de la bouée (9) et l'ouverture de l'organe de préhension (24) sans écarter les deux moitiés (9a, 9b) de la bouée (9) et ainsi libérer la bouée (9) de l'organe de préhension (24).

5. Système d'installation et de désinstallation de bouée sous-marine (10), le système comprenant un véhicule sous-marin (10) configuré pour un fonctionnement sous-marin et le transport de bouées (9) sous le niveau de la mer (6) ; dans lequel le véhicule (10) comprend un système de propulsion et de gouverne pour manœuvrer le véhicule et un système de réglage de flottabilité (19) pour régler la flottabilité du véhicule (10) au cours d'un fonctionnement sous-marin ; dans lequel le véhicule (10) comprend un châssis de véhicule (10') et un système d'organe de préhension (18) s'étendant à partir du châssis (10') ; le système d'organe de préhension (18) comprenant un organe de préhension (24) pour la préhension et la libération d'une bouée (9), le système d'organe de préhension (18) comprenant en outre un mécanisme de réglage (29, 30, 31) pour régler l'orientation de l'organe de préhension (24) par rapport au châssis de véhicule (10') pour installer une bouée (9) dans une orientation et une position contrôlées sur une construction sous-marine ou pour désinstaller la bouée (9) de celle-ci ; **caractérisé en ce que** le système de réglage de flottabilité (19) est agencé sur le système d'organe de préhension (18) à distance du châssis (10') pour régler la flottabilité du véhicule (10) au cours d'un fonctionnement sous-marin ; le système de réglage de flottabilité (19) comprend deux ensembles de réservoirs (20) capables d'un réglage de flottabilité spécifique de l'organe de préhension (24) indépendamment l'un de l'autre.

6. Système selon la revendication 5, dans lequel le système de réglage de flottabilité (19) comprend une pluralité de réservoirs d'eau (29) attachés à l'organe de préhension (24) à distance du châssis (10'), dans lequel chaque réservoir d'eau (20) est divisé en un premier compartiment (20a) pour de l'eau et un second compartiment (20b) pour du gaz, les deux compartiments (20a, 20b) étant mutuellement séparés par une membrane flexible (21) et configurés pour un remplissage de gaz sous pression dans le second compartiment (20b) pour exercer une pression sur la membrane et ainsi pousser l'eau hors du premier compartiment (24a) afin d'augmenter la flottabilité du véhicule (10) .

7. Système selon la revendication 6, comprenant en outre un navire de commande de surface (13) et un ombilical (14) qui relie le navire de commande (13) au véhicule (10) ; dans lequel un centre de commande (15) est ménagé sur le navire de commande (13) pour commander à distance la manœuvre et le fonctionnement du véhicule (10) ; dans lequel le véhicule (10) comprend en outre un système de commande (17) connecté de manière fonctionnelle au système de propulsion et de gouverne et au mécanisme de réglage (29, 30, 31), le système de commande (17) étant configuré pour recevoir des instructions fonctionnelles à partir du centre de commande (15) pour la propulsion et la gouverne et pour le réglage de l'orientation de l'organe de préhension (24) et pour la préhension et la libération d'une bouée (9) ; dans lequel l'ombilical (14) comprend une ligne de transmission de signal du centre de commande (15) au dispositif de commande (17) pour l'émission des instructions fonctionnelles ; dans lequel le système comprend un système de gaz (32, 33) pour fournir du gaz sous pression aux réservoirs (20) et un manomètre (44) ayant un affichage de pression pour afficher la pression de gaz réelle dans le système de gaz (32, 33) ; dans lequel un système d'appareil de prise de vues est configuré pour la capture d'images de l'affichage de pression et pour l'émission des données d'image numériques correspondantes via l'ombilical vers le centre de commande (15) sur le navire de commande (13) pour l'affichage de celles-ci.

8. Système selon l'une quelconque des revendications 5 à 7, dans lequel l'organe de préhension (24) comprend deux mâchoires articulées (25a, 25b) pour la préhension d'une bouée (9), dans lequel chaque mâchoire (25a, 25b) comprend un mécanisme de maintien pour venir en prise avec une moitié (9a, 9b) d'une bouée (9) et pour écarter deux moitiés (9a, 9b) de la bouée (9) par l'ouverture des mâchoires (25a, 25b) pour ainsi libérer la bouée (9) de la ligne sous-marine flexible ou pour attacher la bouée.

9. Système selon la revendication 8, dans lequel le mécanisme de maintien comprend une goupille mobile (40) qui est mobile en rapprochement et en éloignement par rapport à la bouée (9) lorsque la bouée (9) est en butée contre les mâchoires (25a, 25b) pour venir en prise avec un élément récepteur coopérant dans la bouée (9).

10. Système selon la revendication 8 ou 9, dans lequel un premier ensemble de réservoirs (20) sont agencés autour des mâchoires (25a, 25b) pour former une circonférence vers une première extrémité de l'organe de préhension (24) ; et un second ensemble de réservoirs (20) sont agencés autour des mâchoires (25a, 25b) pour former une circonférence vers une seconde extrémité opposée de l'organe de préhension ; chacun des deux ensembles de réservoirs (20) étant réglable de manière individuelle.

11. Système selon l'une quelconque des revendications 5 à 10, dans lequel le mécanisme de réglage d'orientation (29, 30, 31) comprend un accouplement (37) entre le châssis (10') et l'organe de préhension (24), l'accouplement (37) comprenant une charnière inclinable (30) et un actionneur d'inclinaison pour incliner l'organe de préhension (24) par rapport au châssis (10') autour de la charnière inclinable (30), l'accouplement (37) comprenant en outre un axe de rotation (31) normal à une direction de rotation de la charnière (30) pour la rotation de l'organe de préhension (24) par rapport au châssis (10').

12. Procédé d'assemblage d'un système selon l'une quelconque des revendications 5 à 11, le procédé comprenant, la fourniture d'un véhicule sous-marin sans organe de préhension ayant un système de propulsion et de gouverne pour manœuvrer le véhicule mais n'ayant pas de système d'organe de préhension (18) et l'immersion du véhicule sans organe de préhension (10) sous le niveau de la mer (6) ; la fourniture d'un système d'organe de préhension (18) séparément du véhicule sans organe de préhension et l'immersion du système d'organe de préhension (18) sous le niveau de la mer de manière adjacente au véhicule sans organe de préhension ; le réglage de la flottabilité du système d'organe de préhension (18) sur une flottabilité largement neutre du système d'organe de préhension (18) ; le montage du système d'organe de préhension (18) sur le véhicule sans organe de préhension tandis qu'il est immergé dans l'eau.

13. Kit d'assemblage comprenant un système selon l'une quelconque des revendications 5 à 12, le kit comprenant en outre un véhicule sous-marin sans organe de préhension ayant un système de propulsion et de gouverne pour manœuvrer le véhicule mais n'ayant pas de système d'organe de préhension (18) ;
un système d'organe de préhension (18) séparément du véhicule sans organe de préhension, le système d'organe de préhension comprenant un organe de préhension (24) et un raccord pour raccorder l'organe de préhension au véhicule sous-marin sans organe de préhension ; et le système d'organe de préhension comprenant un mécanisme de réglage (29, 30, 31) entre le raccord et l'organe de préhension pour régler l'orientation de l'organe de préhension (24) par rapport au raccord.

14. Kit d'assemblage selon la revendication 13, le système d'organe de préhension comprenant en outre un système de réglage de flottabilité (18) pour régler la flottabilité de l'organe de préhension (24).

15. Utilisation d'un système selon l'une quelconque des revendications 5 à 12 pour l'installation ou la désinstallation d'une bouée (9) sur une ligne sous-marine flexible située au-dessous d'un bateau (5) ou d'une autre installation de surface au niveau de la mer (6).
